Europäisches Patentamt

European Patent Office

Office européen des brevets

(19)

(11) Publication number: **0 160 152 B1**

# EUROPEAN PATENT SPECIFICATION

(12)

(45) Date of publication of patent specification: **29.07.92**

(51) Int. Cl.⁵: **C01G 49/00**, C01G 49/10, C01G 49/14, C22B 15/00, C22B 21/00, C21D 10/00

(21) Application number: **84402008.1**

(22) Date of filing: **05.10.84**

(54) Stabilized Fe2 Cl5 and a preparation method thereof.

(30) Priority: **06.03.84 JP 43209/84**
**18.09.84 JP 195287/84**

(43) Date of publication of application:
**06.11.85 Bulletin 85/45**

(45) Publication of the grant of the patent:
**29.07.92 Bulletin 92/31**

(84) Designated Contracting States:
**AT CH DE FR GB IT LI NL SE**

(56) References cited:
**EP-A- 0 008 413**
**AU-B- 452 927**

**PATENT ABSTRACT OF JAPAN, volume 6, no. 244 (C-138) (1122), 2nd December 1982; & JP-A-57 143 491 (NIPPON KOKAN K.K.) 04-09-1982**

(73) Proprietor: **I.B.E. Co., Ltd.**
**18, aza Gochu**
**oaza Nishihazu Hazu-cho Hazu-gun Aichi(JP)**

(72) Inventor: **I.B.E. Co., Ltd.**
**18, aza Gochu**
**oaza Nishihazu Hazu-cho Hazu-gun Aichi(JP)**

(74) Representative: **Lecca, Jean et al**
**CABINET PLASSERAUD 84, rue d'Amsterdam F-75009 Paris(FR)**

EP 0 160 152 B1

## Description

The present invention relates to a stabilized ferric ferrous salt and a new producing method thereof. More particularly the present invention relates to $Fe_2Cl_5.xH_2O$ stabilized with NaCl and/or $ZnCl_2$. Furthermore, the invention relates to a new producing method of said composition comprising adding $Fe_2Cl_5.x H_2O$ into an aqueous solution of HCl and then adding NaCl and/or $ZnCl_2$.

Hitherto, ferric ferrous salt such as ferric ferrous chloride has been known and ferric ferrous salt is known as complex of ferric salt and ferrous salt. The chemical formula of said ferric ferrous chloride may be as follows :

$$nFeCl_2.mFeCl_3.xH_2O$$

Common ferric ferrous chlorides are $2FeCl_2.FeCl_3.xH_2O$ and $FeCl_2.2FeCl_3.xH_2O$ and said compounds are known to have adsorption ability. Nevertheless, ferric ferrous salts are unstable, and so no usefulness of said ferric ferrous salts has been found out yet.

EP-A-0 008 413 discloses a process for the preparation of alkalichloroferrate (II, III) having the following formula:

$$A_xFe_y^{++}Fe_z^{+++}Cl_{x+2y+3z}$$

in which A is an alkali metal ion, x a number from 1 to 10, y a number from 0 to 1 and z a number from 0 to 1, y and z being not equal to 0 at the same time. This process consists in melting together an alkali metal chloride or an ammonium chloride, anhydrous ferric chloride and iron powder, in wanted stoechiometric amounts. Accordingly, an object of the present invention is to provide a composition in which ferric ferrous salt is stabilized.

Another object of the present invention is to utilize the special character of said stabilized ferric ferrous salt in a wide variety of fields.

Further object of the present invention is to provide a producing method of said composition containing ferric ferrous salt.

Briefly, these objects of the present invention can be attained by a new composition which comprises $Fe_2Cl_5.xH_2O$ stabilized with NaCl and/or $ZnCl_2$ and a new producing method of said composition which comprises adding $Fe_2Cl_5.xH_2O$ into an aqueous solution of strong acid and then adding NaCl and/or $ZnCl_2$.

$FeCl_2.FeCl_3.xH_2O$ may be prepared by the following method:

### 1. From ferric chloride

Ferric chloride is dissolved into aqueous solution of sodium hydroxide and then said solution is neutralized by hydrochloride aqueous solution. The resulting neutralized solution is evaporated to obtain crystals. Said crystals are collected and dissolved into isopropanol-water mixture. The resulting solution is filtered and then concentrated to obtain $Fe_2Cl_5.xH_2O$.

### 2. From ferrous sulfate

Ferrous sulfate is dissolved into HCl aqueous solution and then the resulting solution is concentrated to obtain crystals. Said crystals are collected and dissolved into isopropanol-water mixture. The resulting solution is filtered and then concentrated to obtain $Fe_2Cl_5.xH_2O$.

For preparation of the composition of the present invention by using said ferric ferrous salt, NaCl and/or $ZnCl_2$ is added to an aqueous solution of said ferric ferrous salt.

Further, a desirable producing method of said compound of the present invention is a one-step method wherein ferric ferrous salt is produced in the presence of NaCl and $ZnCl_2$.

One of the desirable one-step methods is as follows: Ferrous sulfate is dissolved into HCl aqueous solution and further, sodium chloride or $ZnCl_2$ is dissolved into said solution. The resulting solution is concentrated to obtain crystals. Said crystals are collected and dissolved into methanol and the resulting solution is filtered and then concentrated to obtain the composition of the present invention, which is purified by washing with pyridine, and then recrystallized with ethanol.

The composition of the present invention is used singly or as complex with other materials in a wide variety of fields, such as water cleaning, keeping freshness of vegetation, antisepsis, antifungi, antibacteria, rust protection, effluent treatment, soil improvement, ionization control, feed enriching, petroleum improvement, antistatic technique, and the like. In said complex another material, such as aluminium, sodium chloride, vegetable fiber, protein is added Said material to be added should be selected according to purposes of use of the composition of the present invention.

Further, it becomes clear that metals treated by the composition of the present invention possess amplified and/or altered special character imparted by the composition of the present invention. Said metals to be treated may be such as Fe, Cu, Al, and the like. For said treatment said metal in the form of powders, flakes, particles, strip, and the like is soaked into an aqueous solution of the composition of the present invention, and then said metal is separated from said solution. In said treatment, the presence of carbon, silica compounds such as silicate, silicon oxide and the like, or a material containing silica such as a zeolite, sand and the like increases and/or alters the effect of the treatment.

Example 1 (Preparation of $Fe_2Cl_5$-NaCl compound)

One gram of ferrous sulfate ($FeSO_4 \cdot 6H_2O$) was put into 5 ml of 12 N HCl aqueous solution and after sufficient agitation insoluble materials in said solution were removed by filtration using filter paper (No. 5C). Sodium chloride (0.1 g) was added into said filtered solution and said solution was concentrated in vacuum. The resulting residue was collected and dissolved into 10 ml of methanol and said methanol solution was dried in a desiccator. The resulting dried material was washed with a small amount of pyridine and then crystallized in 10 ml of ethyl alcohol. 10.6 mg of $Fe_2Cl_5$-NaCl was obtained in the form of fine crystals.

Example 2 (Preparation of the original solution A)

10.6 mg of $Fe_2Cl_5$-NaCl prepared in Example 1 was dissolved into 1 liter of water and further, 10 g of ferric chloride ($FeCl_3 \cdot 6H_2O$) was added into said solution. To obtain the original solution, the resulting solution was diluted by water (1000 X).

Example 3 (Preparation of aluminium complex)

0.5 ml of concentrated HCl aqueous solution was added into 500 ml of the original solution A obtained in Example 2 and aluminium powder was added into the resulting solution. After sufficient agitation said solution with said aluminium powder dispersed therein was kept for 24 hours and then said treated aluminium powder was separated from the solution. Said separated aluminium powder was further put into the original solution A in which 0.5 g of caustic soda and 0.5 g of glucose were added and after sufficient agitation, said solution containing said dispersed aluminium powder was kept for 24 hours. Said treated aluminium powder was separated from the solution and dried to obtain the complex A-1.

Example 4 (Preparation of sodium chloride complex)

Five grams of the complex A-1 and 10 g of glucose were added into 10 liters of sea water and said treated sea water was kept for more than 5 days. Said treated sea water was filtered by using filter paper (No. 5C) and 2 liters of said filtered sea water was put into an enameled vessel. 500 g of sodium chloride was added into said treated sea water in the enameled vessel and dissolved completely by heating at $50^{\circ}C$ and then 1 mg of the complex A-1 was added. The resulting solution was evaporated by heating until the volume of said solution was reduced to 200 ml and crystallized sodium chloride complex (the complex A-2) was obtained during said evaporation. The resulting complex A-2 was dried in a vacuum dryer.

Example 5 (Preparation of magnesium chloride complex)

After the complex A-2 was collected in Example 4, the remaining solution was further concentrated on the water bath until the volume of said solution decreased to 20 ml and crystallized materials were removed from said concentrated solution. Magnesium chloride ($MgCl_2 \cdot 6H_2O$) was added into the remaining solution to make a saturated solution of magnesium chloride. Said saturated solution was used as magnesium chloride complex (the complex A-3).

Example 6 (Preparation of Vegetable fiber complex)

100 g of material containing a large amount of Vegetable fiber, such as beet pulp, droppings of Herbivora, and the like was suspended in 1 liter of water and then 1 g of the complex A-1 was added. After sufficient agitation, said mixture was kept overnight and then heated at a temperature below 100ºC to dry. The vegetable fiber complex (the complex A-4) was finally obtained in the form of a dried powder.

Example 7 (Preparation of soybean-protein complex)

100 g of soybean-protein was suspended in 1 liter of water and then 1 g of the complex A-1 was added. After sufficient agitation, said mixture was kept overnight and then heated at a temperature below 100ºC to dry. The soybean-protein complex (the complex A-5) was finally obtained in the form of a dried powder.

Example 8 (Use of the complex A-1)

100 g of the complex A-1 was put in a bag of nylon cloth and said bag containing the complex A-1 was suspended in water in a concrete tank with a capacity of 20 tons. Although said water to be treated had a high concentration of iron and silicate, no duck weeds propagated in said water during the treatment and said treated water stayed clear and fresh from May to August. Further, no rust and scales were found on the surface of the metal pipe in said tank.

Example 9 (Use of the complex A-2)

The cut ends by the root of greens such as Chinese cabbage, lettuce, spinach, and the like were soaked in 1 ppm aqueous solution of the complex A-2 for 30 min and after soaking, said soaked parts of greens were respectively covered with vinyl chloride films. Said treated greens stayed fresh for one week at room temperature while untreated greens withered within 3 days.

Example 10 (Use of the complex A-3, No. 1)

The original solution was prepared by diluting the complex A-3 first with distilled water at $10^8$ X and then with sea water at 100 X. Said original solution was added into emulsion of cutting oil in a 1/1000 volume ratio and said treated emulsion was kept at 30ºC. No microorganisms propagated in the emulsion and the emulsion did not denature for more than 35 days while many microorganisms propagated in the untreated controlled emulsion and said untreated emulsion completely coagulated after 5 days.

Example 11 (Use of the complex A-3, No. 2)

The original solution of Example 10 was diluted with distilled water at 1000 X and the sawdust, aluminium flake, and sea sand were respectively soaked in said diluted solution for 24 hours. Said treated sawdust, aluminium flake, and sea sand were respectively separated from said solution and dried. 50 g of mixture of the treated sawdust and the treated aluminium flake (50:1 weight ratio) were put into a glass column (diameter 3.5 cm) and effluent (BOD 9100 mg/liter) from a sugar refining factory was circulated through said glass column at the rate of 50 ml/minute. Further, said effluent was circulated at the rate of 50 ml/minute through a glass column (diameter 3.5 cm) containing 100 g of mixture of the treated sea sand and the treated aluminium flake (100:1 weight ratio). The BOD of the treated effluent decreased to 14 mg/liter.

Example 12 (Use of the complex A-3, No. 3)

Eight liters of sea water were fed into a plastic vessel and 1 g of the treated sawdust of Example 11 was added to said sea water. A graphite plate (19.5 X 10 cm) as an anode and a copper plate (19.5 X 10 cm) as a cathode were respectively inserted into said treated sea water. The distance between anode and cathode was 35 cm and 0.2 volt direct current was charged to said electrodes while air was blown into said sea water while charging the direct current. Immediately a large amount of white clots and brown clots were formed around and/or on the cathode and a metal film formed on the surface of the sea water. After charging the direct current for 48 hours, no chlorine ion was detected in said sea water.

Example 13 (Use of the complex A-3, No. 4)

Rice plants were cultivated by using only the treated sea water of Example 12 and no nuisance to growth of the rice plants was recognized.

4

Example 14 (Use of the complex A-4)

300 g of the complex A-4 was mixed in the soil of a 10 a nursery and seedlings of rice plant were cultivated in said nursery by using the ordinary method. Said seedlings were replanted in a rice field and excellent growth of said seedlings was recognized without the unwanted stem forking. 793 kg of rice was harvested per 10 a of said rice field while only 480 to 510 kg of rice was harvested per 10 a of the untreated controlled rice field.

Example 15 (Use of the complex A-5)

0.1% of the complex A-5 was mixed with the feed and said feed was administered to a cow with no appetite. The appetite of said cow increased very much and said cow recovered from the mastitis-like condition, and two to three days after administering the feed, said cow's milk production increased by about 10%.

Example 16 (Treatment of filter)

(1) Preparation of treating solutions

I 5 g of ferric chloride ($FeCl_3 \cdot 6H_2O$) was added to 50 ml of the original solution A and further, a solution of 23 g of caustic soda in 50 ml of water was added into said solution. Distilled water was added into the resulting solution to increase the volume to 200 ml. Thus, the first solution was prepared.
II 5 g of ferric chloride ($FeCl_3 \cdot 6H_2O$) was added into 50 ml of the original solution A and further, 50 ml of the concentrated HCl aqueous solution was added into said solution to bring the volume to a value of 100 ml. Thus, the second solution was prepared.
III The complex A-3 was diluted with distilled water at $10^8$ X and further, the resulting diluted solution was diluted by sea water at 100 X. Thus the third solution was prepared.

(2) Treatment of filter

Three vessels containing respectively 10 liters of distilled water were used and 10 ml of said treating solution was added into each vessel to prepare the first treating solution, the second treating solution, and the third treating solution. A filter was soaked in the first treating solution for 3 hours; the second treating solution for 3 hours; and the third treating solution, more than 10 hours. Thus the treated filter was obtained.

Example 17 (Use of the treated filter)

Subterranean water containing a large amount of iron component was filtered by using the treated filter of Example 16 and radishes were water-cultivated by using said treated water. As a result, the rate of growth of said radishes increased, and decaying by microorganisms was completely prevented and high graded radishes were obtained. The radishes cultivated with untreated water somewhat decayed and their growth was slow.

Example 18 (Treatment of plastic film)

(1) Preparation of the treating solution

The complex A-3 was diluted with distilled water to $10^8$ X and further, said solution was diluted with sea water to 100 X. Five ml of the resulting solution, 5 g of citric acid, and 10 g of the complex A-5 were added to 4995 ml of distilled water and after sufficient agitation, an iron piece (5 x 7 cm) having 0.5 ml of $\alpha$-tocopherol acetate applied respectively on both of its surfaces, was immersed in the resulting solution and kept overnight at room temperature. Then, said iron piece was removed from the solution and said solution was vacuum-filtered with the filter paper (No. 5C). The resulting filtered solution was used as the treating solution.

(2) Treatment of plastic film

The treating solution was applied on the surface of a film of polyvinyl chloride and the resulting film was dried.

The freshness test of fruit and Vegetable by using said treated film was carried out as follows: Bananas were wrapped with said treated film and kept at 30°C. Said wrapped bananas stayed fresh for three days while bananas wrapped with the untreated control film turned black in the most parts of the peelings and some eatable parts of bananas decayed in one day.

Spinach and leeks were respectively wrapped with said treated film and no colour change of spinach and leeks were recognized and they stayed fresh after three days, while spinach and leeks wrapped with the untreated control film remarkably withered.

Example 19 (Preparation of ferric ferrous chloride-$ZnCl_2$ compound)

One gram of ferrous sulfate ($FeSO_4 \cdot 6H_2O$) was put into 5 ml of 12 N HCl aqueous solution and after sufficient agitation, insoluble material in said solution was removed by filtration using filter paper (No. 5C). 0.1 g of zinc chloride was added into said filtered solution and said solution was concentrated in vacuum. The resulting residue was collected and dissolved into 10 ml of methanol and said methanol solution was dried in a desiccator. The resulting dried material was washed with a small amount of pyridine, and then crystallized in 10 ml of ethyl alcohol. 15.2 mg of ferric ferrous chloride-$ZnCl_2$ product was obtained in the form of fine crystals.

Example 20 (Preparation of the original solution B)

One gram of the ferric ferrous chloride-$ZnCl_2$ product of Example 19 was dissolved into 50 ml of distilled water, and further, 4 g of ferric chloride ($FeC_3l \cdot 6H_2O$) was added into said solution. To obtain the original solution B, the concentrated HCl aqueous solution was added to the resulting solution to bring its volume to a value of 100 ml.

Example 21 (Recovery of insulating oil)

A copper piece (5 X 10 cm) was immersed in the diluted original solution B ($10^6$ X), and said copper piece was taken out from said solution after immersing for 24 hours. Said treated copper plate was inserted into denatured insulating oil and kept for 10 days at room temperature. After said treatment, said copper piece was taken out from the oil and the electric breakdown endurance of said treated insulating oil was determined for four samples. The result is shown in Table 1. The figures in Table 1 show the electric breakdown endurance of the insulating oil (K.V).

| Sample No. | 1 | 2 | 3 | 4 | average |
|---|---|---|---|---|---|
| Treated oil | 50< | 50< | 50< | 50< | 50< |
| Untreated oil (control) | 30 | 28 | 32 | 27 | 29.3 |

Table 1

Referring to Table 1, it may be clear that said insulating oil was recovered to the same quality as fresh oil.

Example 22 (Antistatic agent for textile)

A polyester cloth (100 cm$^2$) was soaked in the diluted original solution B ($10^6$ X) and kept for 24 hours. After treating for 24 hours, said polyester cloth was taken out from said solution and dried. The frictional charge voltage and its half- period value about said treated polyester cloth were determined. The results are shown in Table 2.

6

| Sample | Frictional charge voltage (V) | Half-period |
|---|---|---|
| Treated cloth | 24 | 4.0 |
| Untreated cloth (control) | 7800 | more than 180 |

Table 2

Example 23 (Improvement of crude petroleum)

An iron piece (5 X 10 cm) was immersed in the diluted original solution B ($10^6$ X), and said iron piece was taken out from said solution after 24 hours. Said treated iron piece was put into crude petroleum and kept for 2 hours at room temperature. After said treatment, said iron piece was taken out from the crude petroleum and the combustion test of said treated crude petroleum was carried out. As the result, less oil soot was produced and better igniting effectiveness was obtained as compared with untreated crude petroleum. The results of the analysis of the treated crude petroleum are shown in Table 3.

| | |
|---|---|
| Water content (by KF method) | 172 ppm |
| Ash content | 0.01% |
| Carbon residue | 0.23% |
| Sulfur content | 0.03% |
| Nitrogen content | 0.08% |
| Specific gravity (15/4$^o$C) | 0.7805 |
| API degree (60$^o$F) | 49.72 |
| Kinematic viscosity (30$^o$C) | 1.193 , $10^{-6}$ m$^2$/s |
| Flash point (TAG) | -39.0$^o$C |
| Flow temperature | -42.5$^o$C |
| Heating value | 46189 J/g |

Table 3

Example 24 (Improvement of lubricating oil)

An iron ring was immersed in the diluted original solution B ($10^6$ X) and said iron ring was taken out from said solution after 24 hours. The following friction test was carried out:

7

The surfaces of a pair of T.P soft steel plate were respectively contacted with the upper and lower parts of a shaft rotating at 373 rpm while loading the weight of 6.5 kg and supplying said treated lubricating oil to the contacting surfaces. After contact with said loading for 8 hours, the value of [Reduced thickness] X [length of contacting part] of said T.P soft steel plate in contact with the upper part of said shaft was 14 x $10^{-2}$ [mm]$^2$, while the value of the untreated control lubrication oil was 30 x $10^{-2}$[mm]$^2$.

Example 25 (Effluent treatment)

3 kg of iron scraps were immersed in 5 liters of the diluted original solution B ($10^6$ X) and said iron scraps were taken out from said solution after 48 hours. Said iron scraps were put on a coarse sand layer (thickness 10 cm, sectional area 2.3 m$^2$) in three columns. Said three columns were combined in series and effluent containing raw sewage, effluent from kitchens and the like was continuously circulated through said three columns at a rate of 1 ton per day. After treating for 3 days, the treated effluent became clear and the treatment of said effluent was proven to be satisfactory.

The quality of the treated effluent after treating for 5 days is shown in Table 4.

| Quality | Before treatment | After treatment |
|---|---|---|
| BOD (mg/liter) | 8480 | 2.0 |
| COD (mg/liter) | 1360 | 0.5 |
| SS (mg/liter) | 56 | 0 |
| Extract with n-hexane (mg/liter) | 488 | 0.3 |
| The number of E. coli/cm$^3$ | $4.3 \times 10^6$ | 0 |
| Phosphoric ion (mg/liter) | 5.2 | 0.1 |

Table 4

Example 26 (Antisepsis and antifungi)

0.1 g of iron powder and 1 ml of soy sauce were added into 25 ml of the diluted original solution B ($10^6$ X) and after sufficient agitation, said mixture was kept overnight. Then, said mixture was filtered through the filter paper (No. 5C) and 1 ml of said filtrate was added into 1 liter of soy sauce diluted 2 X with water and said mixture was continuously agitated with a magnetic stirrer at room temperature.

After agitating for 3 weeks, no propagation of fungi or bacteria was recognized in the treated soy sauce and the flavour of the treated soy sauce also did not change, while remarkable propagation of fungi and bacteria and putrefaction were recognized in the untreated control soy sauce.

Example 27 (Rust prevention)

0.1 g of iron powder and 0.1 g of carbon powder were added into the diluted original solution B ($10^6$ X), and after 24 hours said mixture was filtered through filter paper (No. 5C). An iron piece (5 X 10 cm) gathering rust was immersed in 150 ml of said filtrate for 24 hours.

For the evaluation of rust prevention, said treated iron piece was immersed in sea water for 30 days. The surface of said treated iron piece became dark and no increase in rust was recognized, while a remarkable increase in rust was recognized on the surface of the untreated control iron piece.

8

Example 28 (Deodorizing)

Four impingers were connected in series and 350 ml of the diluted original solution B ($10^6$ X) were respectively fed to the first, second and third impingers and 150 ml of the diluted original solution B was fed to the fourth impinger. The distance between foaming plate of the impinger and surface of the solution was respectively controlled about 8 to 9 cm. Four types of gas to be treated were respectively circulated through said four impingers and smell concentration for each treated gas was determined. Smell concentration is defined as the magnification of dilution when no smell of the treated gas is detected while diluted with air. The results are shown in Table 5.

| Treating time (min) | Gas A | Gas B | Gas C | Gas D |
|---|---|---|---|---|
| Untreated | 5000 | 5000 | 50000 | 20000 |
| 3 | 100 > | 173 | 2000 | 100 > |
| 30 | 100 > | 214 | 2500 | 100 > |
| 60 | 100 > | 424 | 2500 | 100 > |

Table 5

Gas A:  Exhaust gas from the mixing process of raw rubber.

Gas B:  Exhaust gas from the boiling of materials for

  beer.

Gas C:  Exhaust gas from the boiling of materials for

  beer.

Gas D:  Exhaust gas from the fermenting  of yeast.

Referring to Table 5, it may be clear that the compound of the present invention has a remarkable and durable deodorizing effectiveness.

**Claims**

1.  A mixture comprising the ferric ferrous salt $Fe_2Cl_5 \cdot xH_2O$ stabilized by adding at least one of NaCl and $ZnCl_2$.

2.  A mixture according to claim 1 in the form of an aqueous solution.

3.  A process for producing a mixture according to claim 1 comprising dissolving $Fe_2Cl_5 \cdot xH_2O$ into an aqueous solution of HCl and then adding NaCl or $ZnCl_2$.

4.  A process for preparing the mixture of claim 1 comprising dissolving ferrous sulfate into aqueous solution of hydrochloric acid, further, dissolving sodium chloride or zinc chloride into said solution, concentrating the resulting solution to obtain crystals collecting and dissolving said crystals into methanol, filtering the resulting solution, and concentrating said filtrate.

5. A process according to claim 4, wherein the resulting compound is further washed with pyridine and then recrystallized by ethanol.

**Revendications**

1. Mélange comprenant le sel ferreux ferrique $Fe_2Cl_5.xH_2O$ stabilisé par addition d'au moins l'un du NaCl et du $ZnCl_2$.

2. Mélange selon la revendication 1 sous la forme d'une solution aqueuse.

3. Procédé pour la production d'un mélange selon la revendication 1 comprenant la dissolution du $Fe_2Cl_5.xH_2O$ dans une solution aqueuse d'HCl et ensuite l'addition de NaCl ou de $ZnCl_2$.

4. Procédé pour la préparation du mélange de la revendication 1 comprenant la dissolution du sulfate ferreux dans une solution aqueuse d'acide chlorhydrique, de plus, la dissolution du chlorure de sodium ou du chlorure de zinc dans ladite solution, la concentration de la solution résultante pour obtenir des cristaux, la collecte et la dissolution de ces cristaux dans du méthanol, la filtration de la solution résultante, et la concentration du filtrat.

5. Procédé selon la revendication 4, dans lequel le composé résultant est de plus lavé avec la pyridine et ensuite recristallisé par l'éthanol.

**Patentansprüche**

1. Ein das Ferri-Ferro-Salz $Fe_2Cl_5.xH_2O$ umfassendes Gemisch, das durch Zusetzen von wenigstens einem von NaCl und $ZnCl_2$ stabilisiert ist.

2. Gemisch nach Anspruch 1 in Form einer wässrigen Lösung.

3. Verfahren zur Herstellung eines Gemisches nach Anspruch 1, umfassend ein Auflösen von $Fe_2Cl_5.xH_2O$ in einer wässrigen Lösung von HCl und dann ein Zusetzen von NaCl oder $ZnCl_2$.

4. Verfahren zur Herstellung des Gemisches nach Anspruch 1, umfassend ein Auflösen von Ferrosulfat in einer wässrigen Lösung von Chlorwasserstoffsäure, weiterhin ein Auflösen von Natriumchlorid oder Zinkchlorid in dieser Lösung, ein Einengen der erhaltenen Lösung zur Erzielung von Kristallen, ein Gewinnen und ein Lösen dieser Kristalle in Methanol, ein Filtrieren der erhaltenen Lösung und ein Einengen dieses Filtrats.

5. Verfahren nach Anspruch 4, worin die erhaltene Verbindung weiterhin mit Pyridin gewaschen und dann aus Ethanol umkristallisiert wird.